(19) Europäisches Patentamt

European Patent Office

Office européen des brevets

(11) **EP 1 291 535 B1**

(12) **EUROPÄISCHE PATENTSCHRIFT**

(45) Veröffentlichungstag und Bekanntmachung des Hinweises auf die Patenterteilung:
**07.12.2005   Patentblatt 2005/49**

(51) Int Cl.⁷: **F16B 21/02**, F16B 39/12

(21) Anmeldenummer: **01123916.7**

(22) Anmeldetag: **06.10.2001**

(54) **Sicherungsmutter und Verfahren zur ihrer Herstellung**

Lock nut and method for making same

Ecrou de blocage et procédé de fabrication

(84) Benannte Vertragsstaaten:
**AT BE CH CY DE DK ES FI FR GB GR IE IT LI LU MC NL PT SE TR**

(30) Priorität: **07.09.2001   DE 10144034**

(43) Veröffentlichungstag der Anmeldung:
**12.03.2003   Patentblatt 2003/11**

(73) Patentinhaber: **Metallwarenfabrik Hermann Winker GmbH & Co. KG**
**78549 Spaichingen (DE)**

(72) Erfinder: **Winker, Alexander, Dr.**
**78549 Spaichingen (DE)**

(74) Vertreter: **Winter, Martina et al**
**Kirchstrasse 4-6**
**71364 Winnenden (DE)**

(56) Entgegenhaltungen:
EP-A- 0 825 354    WO-A-94/07040
DE-A- 4 231 320    DE-A- 4 327 461

**Beschreibung**

Die vorliegende Erfindung betrifft eine Sicherungsmutter nach dem Oberbegriff von Anspruch 1.

Sicherungs- oder Klemm-Muttern zeichnen sich dadurch aus, dass sie eine Sicherung oder einen Mechanismus gegen Lockern am Bolzen, an der Welle, der Schraube, etc. oder Verlieren aufweisen. Als Verliersicherung kann bspw. ein Kunststoffring am Mutterkörper vorgesehen sein. Eine weitere an sich bekannte Form der Verliersicherung besteht in einer Gewindedeformierung, die mit üblichen, dem Fachmann bekannten Herstellungsverfahren eingebracht werden kann. Der Kunststoffring darf nicht zu knapp bemessen bzw. die Gewindedeformierung zu stark sein, weil die Mutter sonst nicht mehr auf den Bolzen geschraubt werden kann. Dies hat zur Folge, dass die Sicherung zwar reversibel, die anwendbare Kraft aber begrenzt ist, so dass stärkere Erschütterungen zum Lockern der Mutter auf dem Bolzen führen können. Eine andere bekannte Mutter weist einen geschlitzten Hals mit einem Außengewinde auf, auf welches ein Spannring aufgeschraubt werden kann. Die Herstellung einer solchen Mutter ist jedoch umständlich und teuer. Eine weitere Lösung sieht vor, dass am Gewinde der Mutter ein Kragen und eine entsprechende Nut am Bolzen, an der Welle, Schraube, etc. angebracht wird, so dass beim Aufschrauben der Mutter der Kragen in die Nut gedrückt wird. Diese Verbindung ist zwar stabil, aber nicht mehr lösbar, also irreversibel. Die Fertigung der Teile mit Kragen und Nut ist außerdem kostenaufwendig.

Eine im Stand der Technik bekannte spezielle Lösung des Problems ist eine in axialer Richtung geschlitzte Radsicherungsmutter, die senkrecht zum Schlitz eine durchgehende Schraube aufweist. Die Mutter kann also ohne Klemmung aufgeschraubt und dann durch Anziehen der Schraube gesichert werden. Aber auch diese Spezialanfertigung ist aufwendig und kostenintensiv.

Ferner ist im Stand der Technik die sog. "Kreis-Keil-Technik", bspw. aus der DE 42 31 320 C2 und der DE 196 33 541 C2 bekannt.

Die DE 42 31 320 C2 offenbart eine Vorrichtung zum lösbaren Verbinden von mindestens zwei Gegenständen, mittels eines bspw. einstückigen Stiftes am ersten Gegenstand und einer Aufnahme am zweiten Gegenstand, welcher eine Keilprofilmutter sein kann. Der Stift weist in Umfangsrichtung radial übersteigende Nocken in Form von Keilprofilen auf, während die Aufnahme entsprechende Nuten in Form von Keilprofilen aufweist. Die Rückenflächen der Nocken und die Kehlflächen der Nuten folgen im wesentlichen dem Verlauf einer logarithmischen Spirale bezüglich ihrer Achse. Zwischen Nocken und Nuten ist zum Ineinanderstecken des Stiftes in die Aufnahme ein Spalt vorgesehen.

Die DE 196 33 541 C2 betrifft eine Welle-Nabe-Verbindung, insbesondere in Form eines Bolzens und einer mit diesem zusammen wirkenden Mutter. Hierbei sind auf der Außenumfangsfläche der Welle und der Innenumfangsfläche der Nabe in Umfangsrichtung radial ansteigende Keilflächen vorgesehen. Nach dem Fügen von Welle und Nabe liegen einander Keilflächen mit gleicher Steigung gegenüber. Zur Erreichung einer formschlüssigen Axialsicherung zwischen Welle und Nabe sind ferner Erhebungen bzw. Vertiefungen vorgesehen.

In der internationalen Patentanmeldung WO 94/07040 ist eine Vorrichtung beschrieben, die als Sicherung gegen ein Lösen von Gewindemuttern bei auftretenden Schwingungen bzw. Rüttelkräften dient Dabei weist eine Gewindemutter ein Ansatzstück auf, an dessen Außenumfang Keilprofile angeformt sind. Diese Gewindemutter wird auf einem Gewindebolzen aufgeschraubt Die Sicherung erfolgt über einen Sicherungsring, der am Innenumfang einer zentralen Bohrung Keilflächen aufweist, die mit den Keilprofilen des Ansatzstückes zusammenwirken. Dazu wird der Sicherungsring gegenüber dem Ansatzstück verdreht, bis die sich gegenüber liegenden Keilprofile und Keilflächen aneinander liegen und ein Reibschluss erreicht ist Dieser Reibschluss erfolgt jedoch sofort beim Aufschrauben der Mutter auf den Bolzen.

Die Aufgabe der vorliegenden Erfindung besteht somit darin, eine Sicherungsmutter bereit zu stellen, die eine reversible Sicherung ermöglicht, ohne Klemmung aufgebracht und danach mit maximaler Kraft geklemmt werden kann, und die gleichzeitig einfach und kostengünstig herstellbar ist.

Die Lösung besteht in einer Sicherungsmutter mit den Merkmalen des Anspruchs 1 und in einem Verfahren mit den Merkmalen des Anspruchs 14.

Die erfindungsgemäße Sicherungsmutter ist mit einem Mutterkörper und einem auf einem Hals des Mutterkörpers drehbar angebrachten Spannring versehen, der auf dem Mutterkörper durch Klemmung fixierbar ist, wobei die Innenfläche des Spannrings mindestens zwei keilförmige Nuten und die Außenfläche des Halses dieselbe Anzahl von keilförmigen Nocken aufweist Eine derartige Sicherungsmutter ist dadurch gekennzeichnet, dass die am Spannring ausgebildeten keilförmigen Nuten die Form von Kreiskeilen aufweisen, die sich um gleiche Winkel über den gesamten Umfang erstrecken, dass die am Hals ausgebildeten Nocken die Form von Kreisprofilen aufweisen, die den Kreiskeilen zugeordnet sind und sich jeweils um einen gleichen Winkel erstrecken, der kleiner ist als der Winkel des zugeordneten Kreiskeils. Diese erfindungsgemäße Ausbildung der Sicherungsmutter bewirkt, dass der Spannring mit Spiel auf dem Hals des Mutterkörpers aufsitzt und über einen gewissen Winkelbereich, der von den Abmessungen der Kreiskeile bzw. Keilprofile im Einzelfall abhängt, frei drehbar ist. Beim Verdrehen des Spannrings gegenüber dem Hals wird letzterer ungleichmäßig zusammen gedrückt, da der Spannring nur an den Berührungspunkten seiner jeweiligen Kreiskeile mit den Keilprofilen Kraft auf den Hals ausübt. Damit ändert sich die Querschnittskontur des Halses, je nach Anzahl der Kreiskeile bzw. Keilprofile, von rund zu oval, dreieckig, viereckig, usw. so dass der Hals am Gewinde des Bolzens oder der Schraube in der Mutter an zwei, drei, vier usw. Punkten anliegt. Diese Veränderungen sind reversibel, da der Hals elastisch ist und beim Lösen des Spannrings die Querschnittskontur wieder kreisförmig wird.

Ein Vorteil der vorliegenden Erfindung besteht darin, dass das Aufbringen der Mutter auf eine Achse, eine Welle, einen Bolzen, eine Schraube etc. völlig unabhängig von der Klemmung ist. Mit anderen Worten: Das Anziehen der Mutter und die anschließende Sicherung sind zwei völlig verschiedene, voneinander unabhängige Arbeitsgänge. Erst wenn die Mutter zuverlässig in ihrer gewünschten Position ist, wird sie durch Klemmung gesichert. Dies ist bei den Muttern mit Kunststoffsicherung oder Gewindedeformation nicht der Fall. Die erfindungsgemäße Sicherungsmutter ist unempfindlich auch gegen stärkere Erschütterungen, da beim Verklemmen die volle mögliche Kraft angewendet werden kann, obwohl die Sicherung wie bei den Muttern mit Kunststoffsicherung bzw. Gewindedeformation reversibel ist. Ein weiterer Vorteil besteht darin, dass keinerlei Bearbeitung an Welle, Bolzen etc. notwendig ist.

Die erfindungsgemäße Mutter ist einfach und kostengünstig herstellbar. Der Spannring kann bspw. mitsamt den Kreiskeilen durch Pressen hergestellt werden. Ein erfindungsgemäßes Verfahren sieht vor, dass der Mutterkörper gepresst wird, wobei der hohle Hals zwar Keilprofile, aber innen kein Gewinde und eine etwas stärkere Wanddicke als eigentlich gewünscht aufweist. Dieser Rohling wird spanend bearbeitet, indem in einer Aufspannung zunächst die korrekte Wandstärke des Halses eingestellt und dann das Innengewinde erzeugt und ggf. die Auflagefläche der Sicherungsmutter bearbeitet wird. Hierbei kann das Innengewinde auch spanlos geformt werden. Dieses Verfahren hat den Vorteil, dass die Mittelachse des Innengewindes zuverlässig reproduzierbar senkrecht zur Auflagefläche steht. Anschließend werden Spannring und Mutterkörper zusammen montiert. Die beiden Teile können dann noch optional unverlierbar miteinander verbunden werden.

Der Mutterkörper kann auch mit glatter Außenfläche, d.h. ohne Keilprofile, gepresst werden und die Keilprofile anschließend durch spanende Bearbeitung eingebracht werden, vorzugsweise in derselben Aufspannung, in der das Innengewinde erzeugt wird.

Die Mutter kann umgekehrt aber auch (für andere Anwendungsfälle) komplett fertig gepresst werden.

Die erfindungsgemäße Sicherungsmutter kann überall dort eingesetzt werden, wo eine Sicherung gegen Lösen oder Lockern erforderlich ist, bspw. als Radsicherungsmutter oder als Ersatz für Kontermuttern. Sie ist in beliebigen Abmessungen realisierbar.

Vorteilhafte Weiterbildungen ergeben sich aus den Unteransprüchen. Vorzugsweise sind drei Kreiskeile und drei Keilprofile vorgesehen, so dass sich für die Klemmung drei Berührungspunkte ergeben und der Hals des Mutterkörpers in Richtung eines etwa dreieckigen Querschnitts verformt wird. Damit erstreckt sich jeder Kreiskeil des Spannrings über einen Winkelbereich von 120°.

Eine weitere bevorzugte Weiterbildung sieht vor, dass sich jedes der drei Keilprofile des Halses über einen Winkelbereich von 30 bis 60°, bevorzugt 40 bis 50°, besonders bevorzugt 45° erstreckt. Damit wird eine gute Wechselwirkung zwischen Kreiskeilen und Keilprofilen und eine gute Klemmwirkung erzielt.

Während die Steigung der Kreiskeile des Spannrings vorzugsweise im wesentlichen linear ist, ist es ferner von Vorteil, wenn die Steigung der Keilprofile des Halses vor der Verklemmung bogenförmig und nach der Verklemmung annähernd linear ist. Dadurch erhält man eine breitere Auflagefläche zwischen Kreiskeilen und Keilprofilen, wodurch Spannungsspitzen vermieden werden.

Die Steigung der Keilprofile kann durch einen Kreisbogen erzeugt sein. Auch die Steigung der Kreiskeile kann aus praktischen Gründen durch einen Kreisbogen erzeugt sein, da sich ideale lineare Steigungen nur schwer herstellen lassen.

Die Steigung der Kreiskeile des Spannrings kann bspw. 1:50 bis 1:100, vorzugsweise 1:70, die Steigung der Keilprofile des Halses bspw. 1:20 bis 1:40, vorzugsweise 1:25 betragen.

Die Wandstärke des Halses entspricht vorzugsweise höchstens 10% des Innendurchmessers des Halses, so dass eine reversible Verformung des Halsquerschnittes möglich ist.

Die Tiefe der Kreiskeile des Spannrings und der Keilprofile des Halses kann bspw. 1 bis 3 %, vorzugsweise 1,75 %, des Innendurchmessers (d) des Spannrings (4) betragen.

Der Mutterkörper einschließlich Hals der Sicherungsmutter kann ferner mit einem Innengewinde versehen sein.

Ein Ausführungsbeispiel der vorliegenden Erfindung wird im Folgenden anhand der beigefügten Zeichnungen näher erläutert. Es zeigen:

Figur 1     eine schematische, nicht maßstabsgerechte Darstellung eines Ausführungsbeispiel eines Spannrings für eine erfindungsgemäße Sicherungsmutter im Querschnitt;

Figur 2a    eine schematische, nicht maßstabsgerechte Darstellung des Spannrings aus Figur 1 auf dem Hals eines Mutterkörpers vor der Klemmung im Querschnitt;

Figur 2b    die Darstellung aus Figur 2a nach der Klemmung;

Figur 3     eine grafische Darstellung der Innen- und Außenkontur des Halses, der Innenkontur des Spannrings sowie der Verformung der Konturen über 120° in losem Zustand;

Figur 4 eine grafische Darstellung der Innen- und Außenkontur des Halses, der Innenkontur des Spannrings sowie der Verformung der Konturen über 120° in verklemmtem Zustand;

Figur 5 eine schematische, nicht maßstabsgerechte Darstellung der erfindungsgemäßen Sicherungsmutter, bei der beide Teile unverlierbar miteinander verbunden sind;

Figur 6a eine geometrische Darstellung zur Berechnung der Kontur der Kreiskeile des Spannrings;

Figur 6b eine geometrische Darstellung zur Berechnung der Kontur der Keilprofile des Halses.

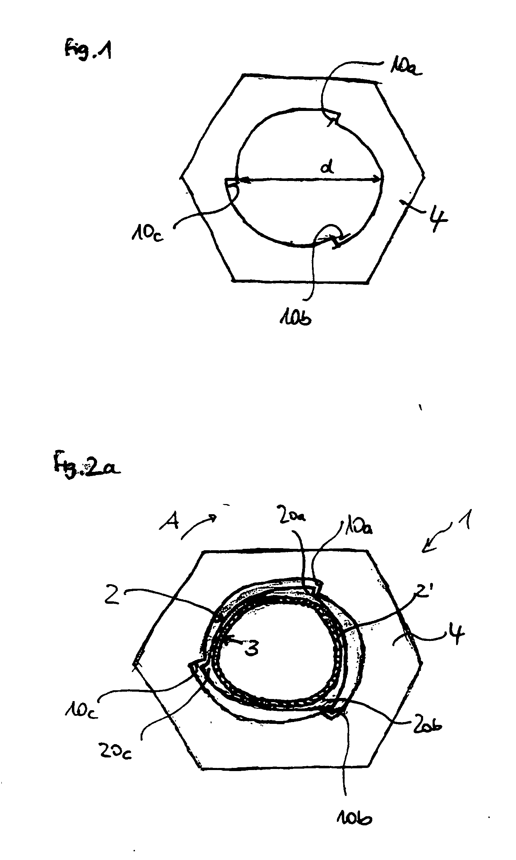

Ein Ausführungsbeispiel einer erfindungsgemäßen Sicherungsmutter ist in den Figuren 1 bis 2b schematisch dargestellt. Die Sicherungsmutter 1 besteht aus einem Mutterkörper und einem Spannring 4. Der Mutterkörper weist einen Hals 2 auf, auf welchen der Spannring 4 aufgeschoben wird. Der Mutterkörper einschließlich dem Hals 2 wiederum ist entlang seiner Innenfläche mit einem Innengewinde 3 versehen. Der Mutterkörper kann, je nach Verwendungszweck der Sicherungsmutter, eine beliebige Außenkontur aufweisen, bspw. einen Sechskant. Der Mutterkörper kann auch mit einem Flansch versehen sein. Alle Bauteile sind aus Metall, jedoch ist auch die Verwendung von Kunststoffen denkbar.

Der Spannring 4 (Figur 1) kann eine beliebige Außenkontur, im Ausführungsbeispiel ein Sechskant, aufweisen. Entlang seiner Innenfläche sind drei Ausnehmungen in Form von Kreiskeilen 10a, 10b, 10c angebracht. Jeder Kreiskeil erstreckt sich über einen Winkelbereich von 120°. Die Steigung der Kreiskeile ist vergleichsweise gering, so dass sie praktisch als linear bezeichnet werden kann. Im Ausführungsbeispiel beträgt die Steigung 1: 70 oder 3/10 mm bei einem Innendurchmesser d von 19,2 mm. Die Bemessung des Innendurchmessers und der Steigung der Kreiskeile hängt im Einzelfall von den Abmessungen der Sicherungsmutter 1 ab. Die Anzahl der Kreiskeile sollte mindestens 2 betragen, kann aber auch größer sein.

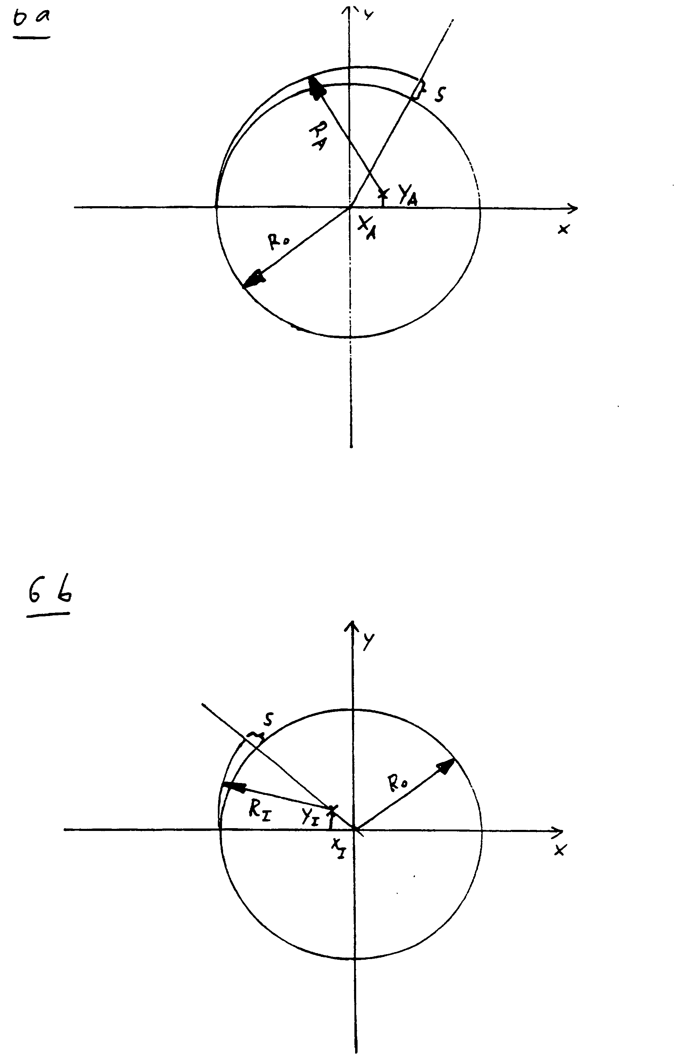

Eine lineare Steigung wäre der Idealfall, eine derartige Kontur der Kreiskeile ist jedoch schwer herstellbar. Praktisch kann die Kontur der Kreiskeile durch einen Kreisbogen hergestellt werden, dessen Mittelpunkt gegenüber dem Mittelpunkt der Sicherungsmutter 1 verschoben ist. Die Berechnung dieses Kreisbogens kann mit den folgenden Formeln (I), (II), (III) vorgenommen werden (vgl. dazu Figur 6a):

$$\text{(I)} \qquad X_A = 0{,}5 \times g$$

$$\text{(II)} \qquad Y_A = (2/\sqrt{3} - \sqrt{3}/2) \times g$$

$$\text{(II)} \qquad R_A = R_0 + X_A$$

mit $R_0$ = Nennradius, g = Steigung

Mit g = 0,3 und $R_0$ = 9,6 für den Außenradius des Spannrings 4 bzw. $R_0$ = 9,5 für den Innenradius des Halses 2 erhält man $X_A$ = 0,15, $Y_A$ = 0,0866 und $R_A$ = 9,75.

Der Hals 2 des Mutterkörpers weist dieselbe Anzahl von Nocken in Form von Keilprofilen auf, wie der Spannring 4 Nuten zählt, im Ausführungsbeispiel also drei Keilprofile 20a, 20b, 20c. Anders als beim Spannring 4 erstrecken sich die Keilprofile 20a, 20b, 20c des Halses 2 über einen kleineren Winkelbereich, im Ausführungsbeispiel 45°. Der Winkelbereich kann 30 bis 60° betragen. Die Steigung der Keilprofile 20a, 20b, 20c hängt ebenfalls von den Abmessungen des Halses 2 ab und ist durch einen Kreisbogen hergestellt, dessen Mittelpunkt gegenüber dem Mittelpunkt der Sicherungsmutter 1 verschoben ist. Die Berechnung des Kreisbogens kann mit den folgenden Formeln (IV), (V), (VI) vorgenommen werden (vgl. hierzu Figur 6b)

$$\text{(IV)} \qquad X_1 = -(\sqrt{2}+1) \times g$$

$$\text{(V)} \qquad Y_1 = (\sqrt{2}+1) \times g$$

$$\text{(VI)} \qquad R_1 = R_0 + X_1$$

mit $R_0$ = Nennradius, g = Steigung

Mit g = 0,3 und $R_0$ = 9,6 für den Außenradius des Spannrings 4 bzw. $R_0$ = 9,5 für den Innenradius des Halses 2 erhält man $X_1$ = - 0,7243, $Y_1$ = 0,7243 und $R_1$ = 8,7757.

Der Außendurchmesser des Halses 2 ist also vorzugsweise etwas geringer als der Innendurchmesser des Spannrings 4, so dass die Differenz einen gewissen Spielraum zum Fügen der Teile liefert; im Ausführungsbeispiel beträgt der Außendurchmesser des Halses 2 19 mm. Im Ausführungsbeispiel, mit einem Innendurchmesser von 17 mm und einem Außendurchmesser von 19 mm, beträgt die maximale Höhe der Keilprofile 20a, 20b, 20c 0,3 mm bei einem Weg über etwa 7,5 mm. Dabei ist es von Vorteil, wenn die Stärke der Wandung 2' des Halses 2 höchstens 1/10 des Innendurchmessers beträgt. Diese geringe Wandstärke erlaubt eine elastische Verformung des Halses 2.

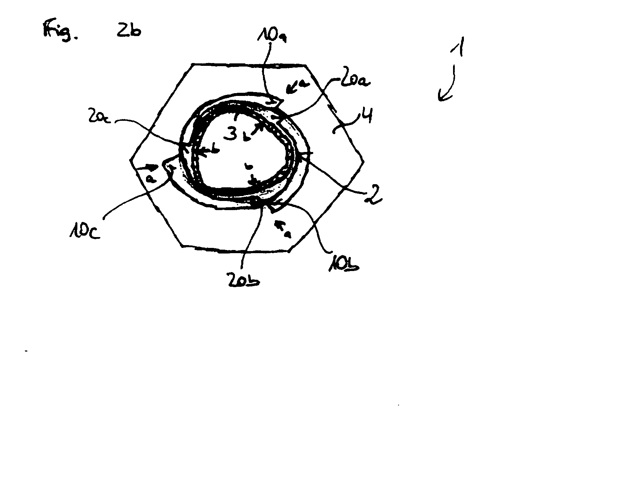

Wie Figur 2a zeigt, wird der Spannring 4 so auf den Hals 2 geschoben, dass die erhabenen Keilprofile 20a, 20b, 20c des Halses 2 mit den hohlen Kreiskeilen 10a, 10b, 10c des Spannrings zur Deckung kommen. Der Spannring 4 sitzt, auch aufgrund der Differenz zwischen Außendurchmesser des Halses 2 und Innendurchmesser des Spannrings 4 mit einem gewissen Fügespiel auf dem Hals 2 auf und kann in Richtung des Pfeiles A frei gedreht werden, und zwar so weit, bis nach dem Ausgleich des Fügespiels die Nocken des Halses 2 an den Keilflächen der Ausnehmungen des Spannringes anliegen. Beispielsweise erfolgt bei einem Fügespiel von 0,1 mm und einer Steigung der Kreiskeile bzw. Keilprofile von 0,3 mm auf 120° die Anlage nach einer Drehung um 40°. Erst dann setzt mit der weiteren Drehung des Spannrings der eigentliche Klemmeffekt ein.

Das Resultat ist in Figur 2b schematisch dargestellt. Die vom Spannring 4 ausgeübte Klemmwirkung ist punktuell, nämlich im Bereich der die Keilprofile 20a, 20b, 20c begrenzenden Kanten 21a, 21b, 21c, angedeutet durch die Pfeile a. Die Klemmwirkung auf den Hals 2 hat zur Folge, dass dieser in den durch die Pfeile b angedeuteten Bereichen leicht abgeflacht wird und die ehemals kreisrunde Kontur des Innendurchmessers etwa dreiecksförmig wird. Damit wird in den abgeflachten Bereich das Innengewinde 3 an die Achse, den Bolzen, die Welle, die Schraube etc gepresst, auf welche die Sicherungsmutter 1 vor dem Anziehen des Spannrings 4 aufgeschraubt wurde. Auf diese Weise wird der Hals 2 mit der Achse, dem Bolzen, der Welle, der Schraube etc. verklemmt und gegen Lockerung oder Verlust gesichert. Diese Sicherung kann wieder rückgängig gemacht werden, indem der Spannring 4 entgegen der Richtung des Pfeils A in Figur 2 gedreht wird. Der elastische Hals 2 nimmt wieder seine in Figur 2 dargestellte kreisförmige Kontur an.

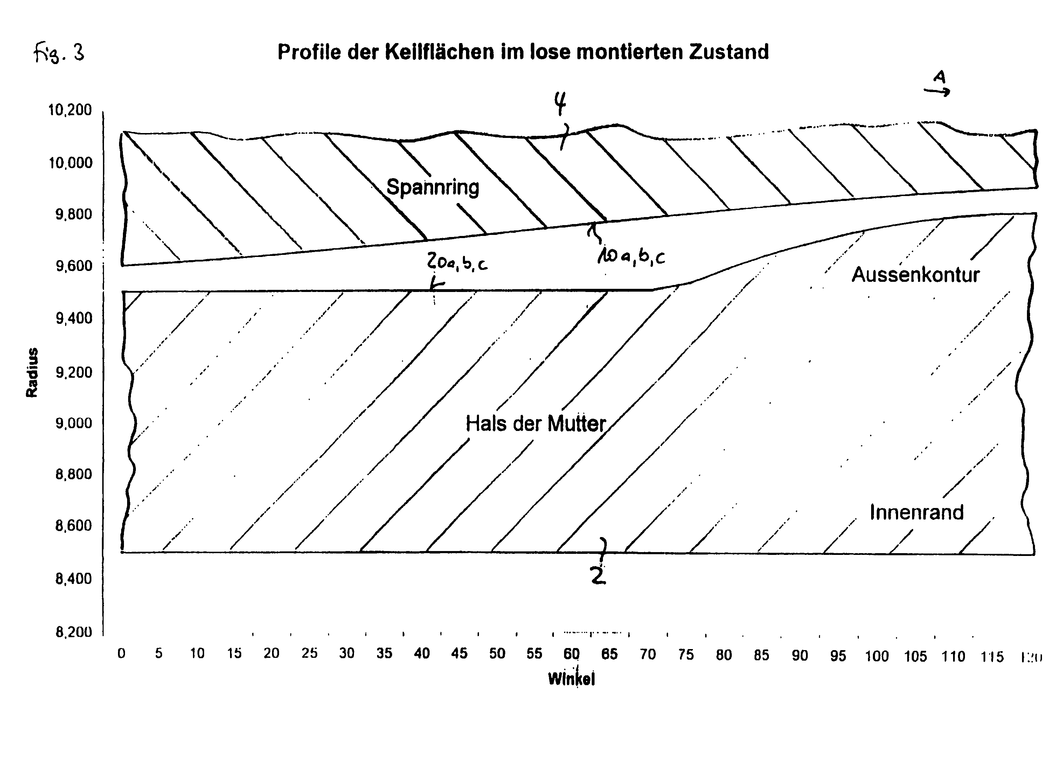

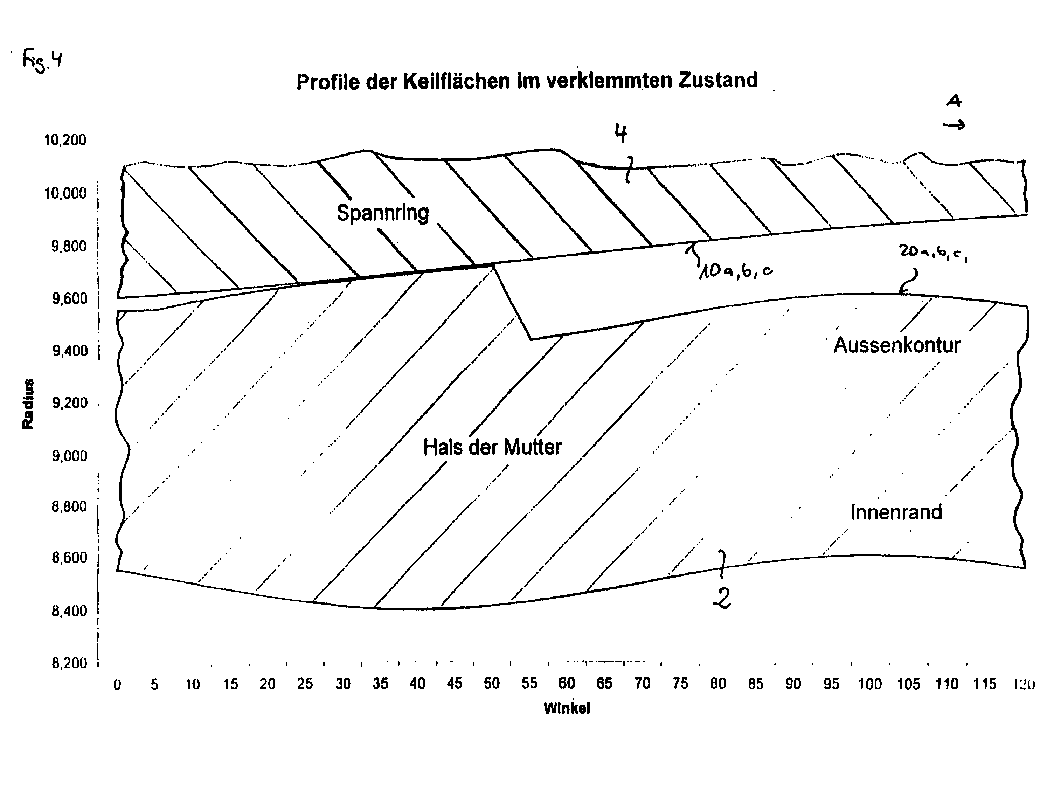

Die Verformung bzw. die Verklemmung wurde für das Ausführungsbeispiel berechnet und in die Grafik gemäß Figur 4 übertragen. Die Grafik gemäß Figur 3 zeigt im Gegensatz hierzu die Situation im losen Zustand.

Aus der Zusammenschau der Figuren 3 und 4 ist die beschriebene elastische Verformung des Halses 2 in drei Punkten bzw. der Verlauf der Kontur des Spannrings 4 und des Halses 2 zu entnehmen. Die Innenkontur des Spannrings 4 verläuft im wesentlichen linear, dies entspricht einem hohlen Kreiskeil 10a des Spannrings 4, der sich über den gesamten dargestellten Bereich von 120° erstreckt. Der Verlauf der Außenkontur des Halses 2 entspricht einem Keilprofil 20a des Halses 2, der sich lediglich über einen Winkelbereich von 45° erstreckt. Die Kontur der Keilprofile 20a, 20b, 20c des Halses 2 ist vor dem Anziehen kreisbogenförmig (Figur 3), weil die Konturen durch einen Kreisbogen nach den Formeln (IV), (V), (VI) hergestellt sind. Diese Kontur ist so berechnet, dass sich nach der Verformung, d.h. nach dem Anziehen des Spannrings 4 und der Verklemmung, eine annähernd lineare Form einstellt, um eine möglichst gleichmäßige, breitere, nicht punktförmige Anlage am im wesentlichen linearen Profil der Kreiskeile 10a, 10b, 10c des Spannrings 4 zu erhalten. Dadurch werden Spannungsspitzen vermieden. Dabei bleibt die Kontur der Kreiskeile 10a, 10b, 10c des Spannrings 4 aufgrund der größeren Wanddicke des Spannrings 4 im wesentlichen unverändert.

Bei der Klemmung verformt sich der Hals 2 im Ausführungsbeispiel dergestalt, dass sich ein Bereich abflacht bis zu einem Innenradius von 8,4 mm, woran sich ein gewölbter Bereich mit einem Innenradius von 8,6 mm anschließt. Dies entspricht dem Verlauf eines abgeflachten Flächenbereichs und einer anschließenden Auswölbung des Halses in einem Klemmpunkt, der in Figur 2b mit den Pfeilen a bezeichnet ist. Der Klemmbereich zwischen dem Kreiskeil 10a des Spannrings 4 und dem Keilprofil 20a des Halses 2 verläuft in einem Winkelbereich etwa zwischen 25 und 50°. In diesem Bereich, in welchem der Hals 2 nach innen abgeflacht ist, findet auch die Klemmung zwischen dem Hals 2 der Sicherungsmutter 1 und der Schraube, der Welle, dem Bolzen, der Achse etc. statt, auf welche die Sicherungsmutter 1 aufgeschraubt ist.

Aus dem oben Gesagten geht hervor, dass die Klemmung bzw. der Sicherungseffekt der erfindungsgemäßen Sicherungsmutter 1 auf der punktuellen elastischen, unrunden Verformung des Halses 2 beruht, die von der kreisrunden Kontur abweicht. Daher ist es nicht zwingend, genau drei Kreiskeile bzw. Keilprofile am Spannring 4 bzw. am Hals 2 vorzusehen. Auch mit zwei, vier oder fünf Kreiskeilen bzw. Keilprofilen erhält man noch eine dementsprechende Verformung des Halses 2. Die Obergrenze liegt dort, wo wegen der zu großen Anzahl der Kreiskeile bzw. Keilprofile keine deutlich unrunde Verformung mehr erhalten wird.

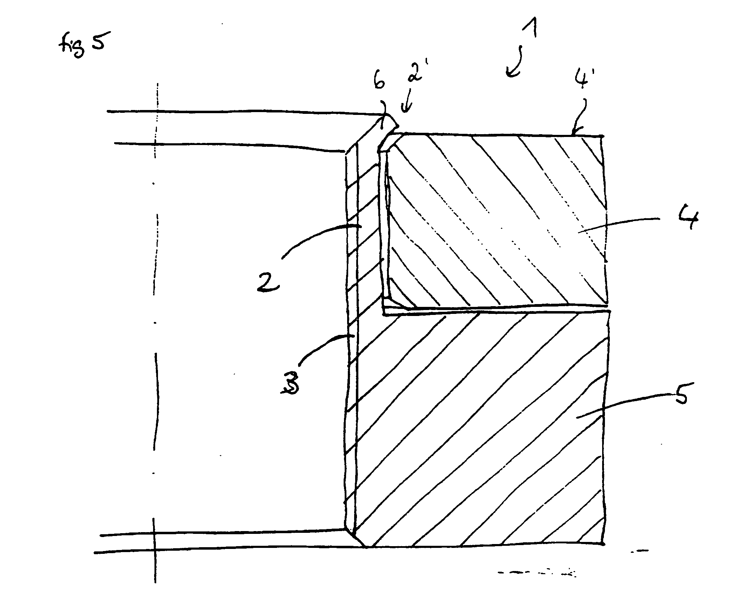

Figur 5 zeigt einen Querschnitt durch eine erfindungsgemäße Sicherungsmutter 1, wobei der Mutterkörper 5 und der Spannring 4 verliersicher miteinander verbunden sind. Hierzu ist am freien Ende 2' des Halses 2 ein überstehender Rand 6 vorgesehen, der sich über die Außenfläche 4' des Spannrings 4 und das Innengewinde 3 hinaus erstreckt. Nach der Montage von Mutterkörper 5 und Spannring 4 wird das freie Ende nach außen, in Richtung auf die Außenfläche 4' des Spannrings 4, umgebogen, so dass der Spannring 4 trotz dem vorhandenen Fügespiel nicht vom Hals 2 des Mutterkörpers 5 abrutschen kann.

Die erfindungsgemäße Sicherungsmutter 1 kann einfach und kostengünstig hergestellt werden. Der Spannring 4 kann in einem Arbeitsgang durch Pressen hergestellt werden. Dies ist beim Mutterkörper schwieriger, da die Mittelachse des Innengewindes 3 immer senkrecht zur Auflagefläche stehen muss und der Toleranzspielraum hierfür gering ist (im Ausführungsbeispiel 3/100 mm). Daher ist es von Vorteil, einen Rohling für den Mutterkörper ohne Innengewinde 3 zu pressen, wobei die Wandstärke des Halses 2 deutlich größer ist als beim fertigen Mutterkörper. Der Rohling wird anschließend in einer Aufspannung spanend bearbeitet, d.h. es wird die gewünschte Wandstärke des Halses 2 eingestellt, das Innengewinde 3 erzeugt und die Auflagefläche der Sicherungsmutter erarbeitet. Hierbei kann das Innengewinde 3 auch spanlos geformt werden. Anschließend werden der Mutterkörper und der Spannring 4 zusammen montiert, wobei der überstehende Rand 6 des Halses 2 leicht nach außen gebogen werden kann, um den Spannring 4 verliersicher auf dem Mutterkörper zu halten.

Die vorliegende Erfindung stellt also eine einfach und kostengünstig herstellbare Sicherungsmutter zur Verfügung, die mit maximaler Kraft verklemmt werden kann und damit besonders gut gegen Lockern und Verlust gesichert ist.

**Patentansprüche**

1. Sicherungsmutter (1) mit einem Mutterkörper (5) und einem auf einem Hals (2) des Mutterkörper (5) drehbar angebrachten Spannring (4), der auf dem Mutterkörper (5) durch Klemmung fixierbar ist, wobei die Innenfläche des Spannrings (4) mindestens zwei keilförmige Nuten und die Außenfläche des Halses (2) dieselbe Anzahl von keilförmigen Nokken aufweist, **dadurch gekennzeichnet, dass** die am Spannring (4) ausgebildeten keilförmigen Nuten die Form von Kreiskeilen (10a,10b,10c) aufweisen, die sich um gleiche Winkel über den gesamten Umfang erstrecken, dass die am Hals (2) ausgebildeten Nocken die Form von Keilprofilen (20a,20b, 20c) aufweisen, die den Kreiskeilen (10a, 10b, 10c) zugeordnet sind und sich jeweils um einen gleichen Winkel erstrecken, der wesentlich kleiner ist als der Winkel des zugeordneten Kreiskeils (10a, 10b, 10c).

2. Sicherungsmutter nach Anspruch 1, **dadurch gekennzeichnet, dass** drei Kreiskeile (10a, 10b, 10c) und drei Keilprofile (20a, 20b, 20c) vorgesehen sind.

3. Sicherungsmutter nach Anspruch 2, **dadurch gekennzeichnet, dass** sich jeder Kreiskeil (10a, 10b, 10c) des Spannrings (4) über einen Winkelbereich von 120° erstreckt.

4. Sicherungsmutter nach Anspruch 2 oder 3, **dadurch gekennzeichnet, dass** sich jedes Keilprofil (20a, 20b, 20c) des Halses (2) über einen Winkelbereich von 30 bis 60°, bevorzugt 40 bis 50°, besonders bevorzugt 45° erstreckt.

5. Sicherungsmutter nach einem der vorhergehenden Ansprüche, **dadurch gekennzeichnet, dass** die Steigung der Kreiskeile (10a, 10b, 10c) annähernd linear ist.

6. Sicherungsmutter nach einem der vorhergehenden Ansprüche, **dadurch gekennzeichnet, dass** die Steigung der Keilprofile (20a, 20b, 20c) vor der Verklemmung bogenförmig ist.

7. Sicherungsmutter nach einem der vorhergehenden Ansprüche, **dadurch gekennzeichnet, dass** die Steigung der Keilprofile (20a, 20b, 20c) nach der Verklemmung annähernd linear ist.

8. Sicherungsmutter nach einem der Ansprüche 5 bis 7, **dadurch gekennzeichnet, dass** die Steigung der Kreiskeile (10a, 10b, 10c) und/oder Kreisprofile (20a, 20b, 20c) durch einen Kreisbogen erzeugt ist.

9. Sicherungsmutter nach einem der Ansprüche 5 bis 8, **dadurch gekennzeichnet, dass** die Steigung der Kreiskeile (10a, 10b, 10c) des Spannrings (4) 1: 50 bis 1:100, vorzugsweise 1:70 beträgt.

10. Sicherungsmutter nach einem der Ansprüche 5 bis 9, **dadurch gekennzeichnet, dass** die Steigung der Keilprofile (20a, 20b, 20c) des Halses (2) 1:20 bis 1: 40, vorzugsweise 1: 25 beträgt.

11. Sicherungsmutter nach einem der vorhergehenden Ansprüche, **dadurch gekennzeichnet, dass** die Wandstärke des Halses (2) höchstens 10% des Innendurchmessers des Halses (2) entspricht.

12. Sicherungsmutter nach einem der vorhergehenden Ansprüche, **dadurch gekennzeichnet, dass** die Abmessungen der Kreiskeile (10a, 10b, 10c) und der Kreisprofile (20a, 20b, 20c) sowie die Wanddikke des Halses (2) derart gewählt sind, dass der Hals (2) an den Anlagebereichen zwischen den Kreiskeilen (10a,10b,10c) und den Kreisprofilen (20a, 20b, 20c) beim Spannvorgang radial nach innen reversibel verformbar ist.

13. Sicherungsmutter nach einem der vorhergehenden Ansprüche, **dadurch gekennzeichnet, dass** die Tiefe der Kreiskeile (10a, 10b, 10c) des Spannrings (4) und der Keilprofile (20a, 20b, 20c) des Halses (2) 1 bis 3 %, vorzugsweise 1,75 %, des Innendurchmessers (d) des Spannrings (4) beträgt.

14. Verfahren zur Herstellung einer Sicherungsmutter nach einem der Ansprüche 1 bis 12, **dadurch gekennzeichnet, dass** der Mutterkörper (5) in Form eines Rohlings gepresst wird, wobei der Hals (2) eine größere Wandstärke als die gewünschte aufweist und dass anschließend die Wandstärke des Halses (2) eingestellt und gegebenenfalls ein Innengewinde (3) erzeugt wird.

15. Verfahren nach Anspruch 13, **dadurch gekennzeichnet, dass** der Mutterkörper (5) in Form eines Rohlings ohne Keilprofile (20a, 20b, 20c) gepresst und anschließend die Keilprofile (20a, 20b, 20c) durch spanende Bearbeitung eingebracht werden.

## Claims

1. Lock nut (1) comprising a nut body (5) and a clamping ring (4) which is rotatably attached to a neck (2) of the nut body (5) and can be fixed on the nut body (5) by clamping, the inner surface of the clamping ring (4) having at least two wedge-shaped grooves and the outer surface of the neck (2) having the same number of wedge-shaped lobes, **characterized in that** the wedge-shaped grooves formed on the clamping ring (4) are in the form of circular wedges (10a, 10b, 10c) which extend by identical angles over the entire circumference, **in that** the lobes formed on the neck (2) are in the form of wedge profiles (20a, 20b, 20c), which are assigned to the circular wedges (10a, 10b, 10c) and in each case extend by an identical angle which is substantially smaller than the angle of the associated circular wedge (10a, 10b, 10c).

2. Lock nut according to Claim 1, **characterized in that** three circular wedges (10a, 10b, 10c) and three wedge profiles (20a, 20b, 20c) are provided.

3. Lock nut according to Claim 2, **characterized in that** each circular wedge (10a, 10b, 10c) of the clamping ring (4) extends over an angular range of 120°.

4. Lock nut according to Claim 2 or 3, **characterized in that** each wedge profile (20a, 20b, 20c) of the neck (2) extends over an angular range of 30 to 60°, preferably 40 to 50°, in particular preferably 45°.

5. Lock nut according to one of the preceding claims, **characterized in that** the slope of the circular wedges (10a, 10b, 10c) is approximately linear.

6. Lock nut according to one of the preceding claims, **characterized in that** the slope of the wedge profiles (20a, 20b, 20c) is curved before the clamping.

7. Lock nut according to one of the preceding claims, **characterized in that** the slope of the wedge profiles (20a, 20b, 20c) is approximately linear after the clamping.

8. Lock nut according to one of Claims 5 to 7, **characterized in that** the slope of the circular wedges (10a, 10b, 10c) and/or wedge profiles (20a, 20b, 20c) is produced by an arc of a circle.

9. Lock nut according to one of Claims 5 to 8, **characterized in that** the slope of the circular wedges (10a, 10b, 10c) of the clamping ring (4) is 1:50 to 1:100, preferably 1:70.

10. Lock nut according to one of Claims 5 to 9, **characterized in that** the slope of the wedge profiles (20a, 20b, 20c) of the neck (2) is 1:20 to 1:40, preferably 1:25.

11. Lock nut according to one of the preceding claims, **characterized in that** the wall thickness of the neck (2) corresponds at most to 10% of the inside diameter of the neck (2).

12. Lock nut according to one of the preceding claims, **characterized in that** the dimensions of the circular wedges (10a, 10b, 10c) and of the circular profiles (20a, 20b, 20c) and also the wall thickness of the neck (2) are selected in such a way that the neck (2) can be reversibly deformed radially inwards at the contact regions between the circular wedges (10a, 10b, 10c) and the circular profiles (20a, 20b, 20c) during the clamping operation.

13. Lock nut according to one of the preceding claims, **characterized in that** the depth of the circular wedges (10a, 10b, 10c) of the clamping ring (4) and of the wedge profiles (20a, 20b, 20c) of the neck (2) is 1 to 3%, preferably 1.75%, of the inside diameter (d) of the clamping ring (4).

14. Method of producing a lock nut according to one of Claims 1 to 12, **characterized in that** the nut body (5) is pressed in the form of a blank, the neck (2) having a greater wall thickness than the desired wall thickness, and **in that** the wall thickness of the neck (2) is then set and an internal thread (3) produced if need be.

15. Method according to Claim 13, **characterized in that** the nut body (5) is pressed in the form of a blank without wedge profiles (20a, 20b, 20c) and then the wedge profiles (20a, 20b, 20c) are incorporated by machining.

## Revendications

1. Ecrou de blocage (1) qui présente un corps d'écrou (5) et une bague de serrage (4) installée de manière à pouvoir tourner sur un collet (2) du corps d'écrou (5) et qui peut être fixée sur le corps d'écrou (5) par serrage, la surface intérieure de la bague de serrage (4) présentant au moins deux rainures en forme de biseau et la surface extérieure du collet (2) présentant le même nombre de cames en forme de biseau, **caractérisé en ce que** les rainures en forme de biseau formées sur la bague de serrage (4) ont la forme de biseaux circulaires (10a, 10b, 10c) qui s'étendant sur un même angle autour de toute la périphérie, **en ce que** les cames formées sur le collet (2) ont la forme de profilés en biseau (20a, 20b, 20c) qui sont associés aux biseaux circulaires (10a, 10b, 10c) et qui s'étendent chacun sur un même angle qui est essentiellement plus petit que l'angle du biseau circulaire (10a, 10b, 10c) associé.

2. Ecrou de blocage selon la revendication 1, **caractérisé en ce que** trois biseaux circulaires (10a, 10b, 10c) et trois profilés en biseau (20a, 20b, 20c) y sont prévus.

3. Ecrou de blocage selon la revendication 2, **caractérisé en ce que** chaque biseau circulaire (10a, 10b, 10c) de la bague de serrage (4) s'étend sur une plage angulaire de 120°.

4. Ecrou de blocage selon les revendications 2 ou 3, **caractérisé en ce que** chaque profilé en biseau (20a, 20b, 20c) du collet (2) s'étend sur une plage angulaire de 30 à 60°, de préférence de 40 à 50° et de façon particulièrement préférable de 45°.

5. Ecrou de blocage selon l'une des revendications précédentes, **caractérisé en ce que** la pente des profilés circulaires (10a, 10b, 10c) est approximativement linéaire.

6. Ecrou de blocage selon l'une des revendications précédentes, **caractérisé en ce que** la pente des profilés en biseau (20a, 20b, 20c) a la forme d'un arc de cercle avant le serrage.

7. Ecrou de blocage selon l'une des revendications précédentes, **caractérisé en ce que** la pente des profilés en biseau (20a, 20b, 20c) est approximativement linéaire après le serrage.

8. Ecrou de blocage selon l'une des revendications 5 à 7, **caractérisé en ce que** la pente des biseaux circulaires (10a, 10b, 10c) et/ou des profilés en biseau (20a, 20b, 20c) a la forme d'un arc de cercle.

9. Ecrou de blocage selon l'une des revendications 5 à 8, **caractérisé en ce que** la pente des biseaux circulaires (10a, 10b, 10c) de la bague de serrage (4) est de 1 : 50 à 1 : 100 et de préférence de 1 : 70.

10. Ecrou de blocage selon l'une des revendications 5 à 9, **caractérisé en ce que** la pente des profilés en biseau (20a, 20b, 20c) du collet (2) est de 1 : 20 à 1 : 40 et de préférence de 1 : 25.

11. Ecrou de blocage selon l'une des revendications précédentes, **caractérisé en ce que** l'épaisseur de la paroi du collet (2) correspond au plus à 10 % du diamètre intérieur du collet (2).

12. Ecrou de blocage selon l'une des revendications précédentes, **caractérisé en ce que** les dimensions des biseaux circulaires (10a, 10b, 10c) et des profilés en biseau (20a, 20b, 20c) ainsi que l'épaisseur de la paroi du collet (2) sont sélectionnées de telle sorte que lors d'une opération de serrage, le collet (2) puisse être déformé radialement vers l'intérieur de manière réversible dans les zones d'appui entre les biseaux circulaires (10a, 10b, 10c) et les profilés en biseau (20a, 20b, 20c).

13. Ecrou de blocage selon l'une des revendications précédentes, **caractérisé en ce que** la profondeur des biseaux circulaires (10a, 10b, 10c) de la bague de serrage (4) et des profilés en biseau (20a, 20b, 20c) du collet (2) représente de 1 à 3 % et de préférence 1,75 % du diamètre intérieur (d) de la bague de serrage (4).

14. Procédé de fabrication d'un écrou de blocage selon l'une des revendications 1 à 12, **caractérisé en ce que** le corps d'écrou (5) est réalisé à la presse sous la forme d'une ébauche, le collet (2) présentant une paroi de plus grande épaisseur que l'épaisseur souhaitée, l'épaisseur de paroi du collet (2) étant ensuite ajustée, un filet intérieur (3) étant éventuellement réalisé.

15. Procédé selon la revendication 13, **caractérisé en ce que** le corps d'écrou (5) est réalisé à la presse sous la forme d'une ébauche qui ne présente pas de profilé en biseau (20a, 20b, 20c), les profilés en biseau (20a, 20b, 20c) étant ensuite ménagés lors d'un usinage par enlèvement de matière.

fig.1

Fig.2a

Fig. 2b

**fig. 3**      **Profile der Keilflächen im lose montierten Zustand**

Fig.4

**Profile der Keilflächen im verklemmten Zustand**

EP 1 291 535 B1

12

fig 5

6a

6b